Europäisches Patentamt

(19) European Patent Office

Office européen des brevets

(11) Publication number: **0 272 031**
**A2**

## (12) EUROPEAN PATENT APPLICATION

(21) Application number: 87310748.6

(22) Date of filing: 07.12.87

(51) Int. Cl.4: **F25B 27/00** , **F25B 17/08** , **F24J 2/38** , **G01S 3/78**

(30) Priority: 15.12.86 US 941709

(43) Date of publication of application:
22.06.88 Bulletin 88/25

(84) Designated Contracting States:
AT BE CH DE ES FR GB GR IT LI LU NL SE

(71) Applicant: **Solar Tracking Inc.**
**300 Cahaba Park South Suite 220**
**Birmingham Alabama 35243(US)**

(72) Inventor: **Moore, Roy Artell**
**Route 1 Box 37-C1**
**Jacksonville Alabama 36265(US)**

(74) Representative: **Allen, William Guy Fairfax et al**
**J.A. KEMP & CO. 14 South Square Gray's Inn**
**London WC1R 5EU(GB)**

(54) **Cooling apparatus.**

(57) A waste or solar heat powered cooling apparatus utilises a heat collector (11) to convert waste or solar energy into heat stored in water. An evacuated chamber (13) houses a desiccant bed (14) and a sprayer (26) which introduces an adsorbate into contact with a heat exchanger conduit (31) extending within the chamber. Evaporation of the adsorbate in contact with the conduit cools a medium circulated within the conduit between the chamber (13) and a chilled water reservoir (32). The evaporated adsorbate is adsorbed by the desiccant bed (14) until a predetermined temperature or saturation level is reached, at which point, heated water from the collector (11) is passed through heat exchanger conduits in the desiccant bed (14) to regenerate the desiccant bed. Iterative adsorption and regeneration cycles maintain the chilled water in a desired temperature range.

## COOLING APPARATUS

The present invention relates to apparatus for cooling or refrigeration.

The phenomenon of adsorption cooling is well documented. Such cooling was the basis of the so-called gas refrigerators which used a flammable gas to evaporate a liquid refrigerant such as ammonia from a solution so that the ammonia could be condensed in purer form to serve as an evaporative heat sink. Due to the toxic nature of ammonia, many other refrigerants have been substituted and due to the difficulty in locating flammable gases at remote areas, most cooling and refrigeration today is done by electrically powered compression refrigeration. Numerous attempts have been made to produce efficient heat exchange apparatus which do not rely on fossil fuels for their primary energy source. Examples of prior cooling methods are provided by US Patent number 4171620; US Patent number 4222244; US Patent number 4227375; and US Patent number 4635460. Waste heat may be derived from any source such as from commercial buildings, industrial operations, and, obviously, the sun in any manner which is convenient.

According to the present invention there is provided apparatus for cooling a desired space, said apparatus comprising:-

(a) a heat source for heating water to a predetermined temperature from a waste heat source and storing said water at or above said temperature;

(b) a chamber for housing a quantity of desiccant at a sub-atmospheric pressure;

(c) a reservoir for holding chilled water;

(d) adsorbate circulating means for introducing and removing water from said chamber;

(e) a first heat exchanger for circulating water through said heat source and through said desiccant in said chamber;

(f) a second heat exchanger for circulating water through said reservoir and a portion of said chamber proximal said absorbate circulating means;

(g) an ambient temperature heat exchanger for cooling the water in said first or second heat exchangers and operably connected to divert water selectively from said first or second heat exchanger.

(h) circuit means for controlling water flow through said first and second heat exchangers and said adsorbate circulating means responsive to the temperature in said chamber and said reservoir; and

(i) an output system connected to said reservoir for circulating chilled water therein around said volume of space to be cooled.

The source of heat may, for example, be a source of waste heat energy or a solar collector, particularly a solar collector which tracks the movement of the sun.

With the apparatus, the heat derived from the source is passed to a volume of water which is stored in the system. The heated water is used as needed to "regenerate" the desiccant as hereinafter described.

The desiccant is contained within a low pressur chamber wherein the partial pressure of water is maintained in a desired range which facilitates the boiling of water at a low temperature, for example 15°C at a partial pressure of 12.7mm of mercury. The desiccant has the first heat exchanger passing therethrough which supplies water as a heat exchanger medium from either the heat source in a regeneration mode or an ambient temperature heat source such as a cooling tower in a cooling mode. Also contained within the chamber is part of an adsorbate circulating means for injecting water into the chamber and a second heat exchanger which utilises water as a heat exchange medium from a chilled water reservoir. The adsorbate water may pass in heat exchange relationship with the second heat exchanger and extracts sufficient heat therefrom to boil the water, thereby cooling the medium. The resultant water vapours are adsorbed by the desiccant, retrieving heat from the first heat exchanger network. When the desiccant becomes saturated, hot water from the heat source is forced through the first heat exchanger, thereby giving up heat to the desiccant and driving the adsorbed water back into vapour. Meanwhile, cooler water from the ambient temperature heat exchanger is circulated through the second heat exchanger network resulting in condensation of the water vapour which is collected in an adsorbate collection chamber for re-circulation through the adsorbate system. Through the use of multiple stages and the introduction of simple antifreeze solution to the heat transfer medium the end temperature can be reduced below 0°C. The only energy input to the system other than that from the heat source, which may be waste heat energy waste heat energy, is used to drive pumps in the heat exchangers and adsorbate assembly, which represents a considerable reduction in the energy required to cool a home or freeze water.

In order that the present invention may more readily be understood, the following description is given, with reference being made to the accompanying drawings, in which:-

Figure 1 is a schematic representation of one embodiement of apparatus according to the invention, which can be used for normal cooling;

Figure 2 is a schematic representation of the electrical circuit of the apparatus;

Figure 3 is a schematic representation of a multi-stage waste heat cooling unit which can be used for refrigeration-type cooling;

Figure 4 is a modified embodiment of the apparatus shown in Figure 1;

Figure 5 is a perspective view of a solar collector mounted for movement and showing the tracker attached;

Figure 6 is a sectional view of the tracker housing showing the solar cells; and

Figure 7 is a schematic block diagram of the tracker circuitry.

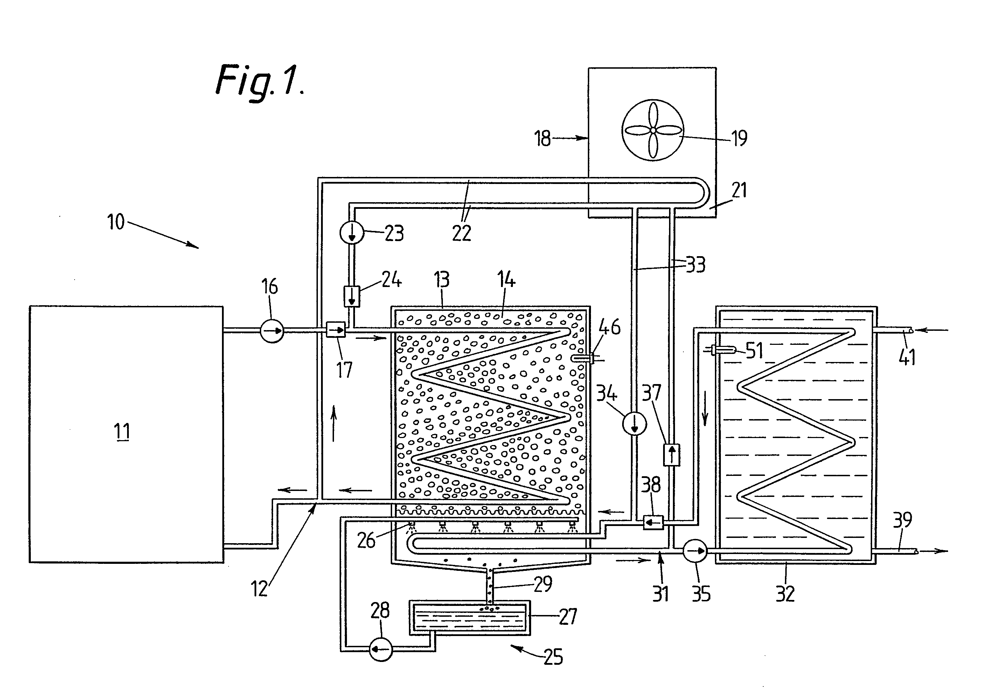

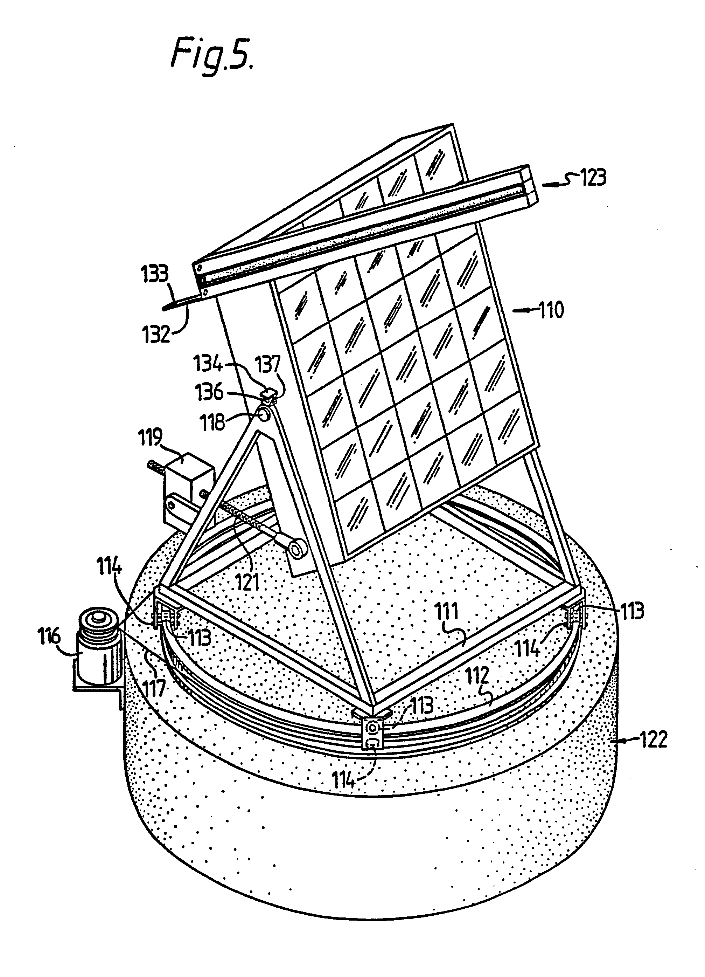

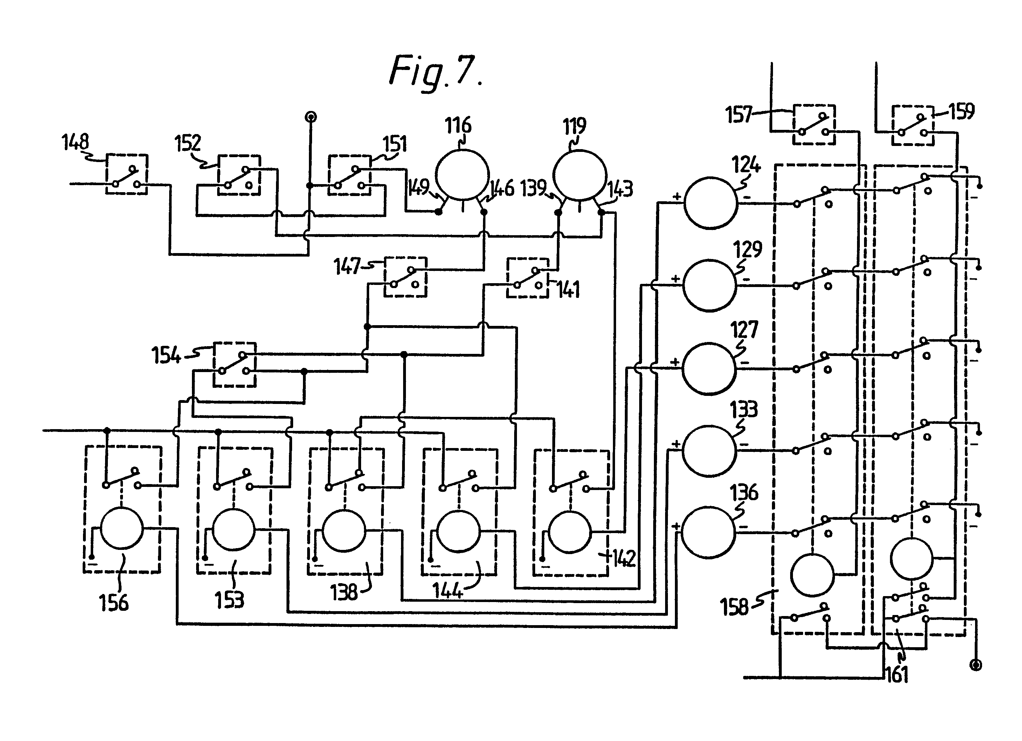

Referring to Figure 1, a waste heat air-conditioning unit 10 includes a heat source and storage system 11, which is the primary source of energy input to the unit 10 and is hereinafter referred to as heat source 11, which may be any waste heat powered system which can heat water and maintain it at above 60°C. Such results are readily achieved with a solar tracker collector as described later with reference to Figures 5 to 7.

A conduit type input heat exchanger network 12, containing water as a heat exchanger medium, extends from the heat source 11 into a housing 13 which defines a low pressure chamber within which a desiccant bed 14 is confined. The heat exchanger network 12 extends within the desiccant bed 14 to the extent necessary for efficient heat exchange given the generally low thermal transfer characteristics of desiccants. The preferred adsorbent for use in the desiccant bed 14 is a silica gel which offers excellent adsorption characteristics for this application. The heat exchanger network 12 includes an input pump 16 which is operated to circulate hot water through the heat source 11 to the desiccant bed 14.

An ambient temperature heat exchanger unit 18, which may be a truly ambient heat exchanger or a common variant such as an evaporative cooling tower having a fan 19 and sump 21, is connected to the input heat exchanger network 12 by conduits 22. A cooling pump 23 is used to circulate water from the heat exchanger unit 18 through the desiccant bed 14, while check valve 17 prevents circulation from the heat exchanger unit 18 to the heat source 11 and check valve 24 prevents flow from the heat source 11 to the heat exchanger unit 18.

An adsorbate pumping unit 25 includes, within the lower portion of the housing 13, a sprayer 36 which receives and disperses water from an adsorbate collection tank 27 via an adsorbate pump 28. The collection tank 27 communicates with the indirect bottom of housing 13 through a conduit 29, such that any water accumulated therein is drained by gravity into the collection tank 27. The housing 13 is maintained at a sub-atmospheric pressure, therefore adsorbate pump 28 is preferentially a magnetically driven pump capable of providing sufficient flow to the sprayer 26 without compromising the low pressure within the housing.

Also extending into the housing 13 is a conduit type chilled water heat exchanger network 31, which also uses water as the heat exchange medium, and circulates water through a chilled water reservoir 32 into the housing 13 proximal the sprayer 26 such that water sprayed thereby comes into contact with the network 31. A chilled water pump 35 is operated to provide the flow through the heat exchange network 31 and reservoir 32.

A second set of conduits 33 connects the ambient temperature heat exchange unit 18 with the chilled water heat exchange network 31 and a second cooling pump 34 circulates water between the housing 13 and the ambient temperature heat exchange unit 18. Check valve 37 prevents circulation of water from the heat exchange unit 18 by the chilled water pump 35 and a check valve 38 prevents circulation of water through chilled water reservoir 32 by the second cooling pump 34. The reservoir 12 has an outlet 39 and a return 41 through which chilled water is supplied to a space, such as a house to be cooled.

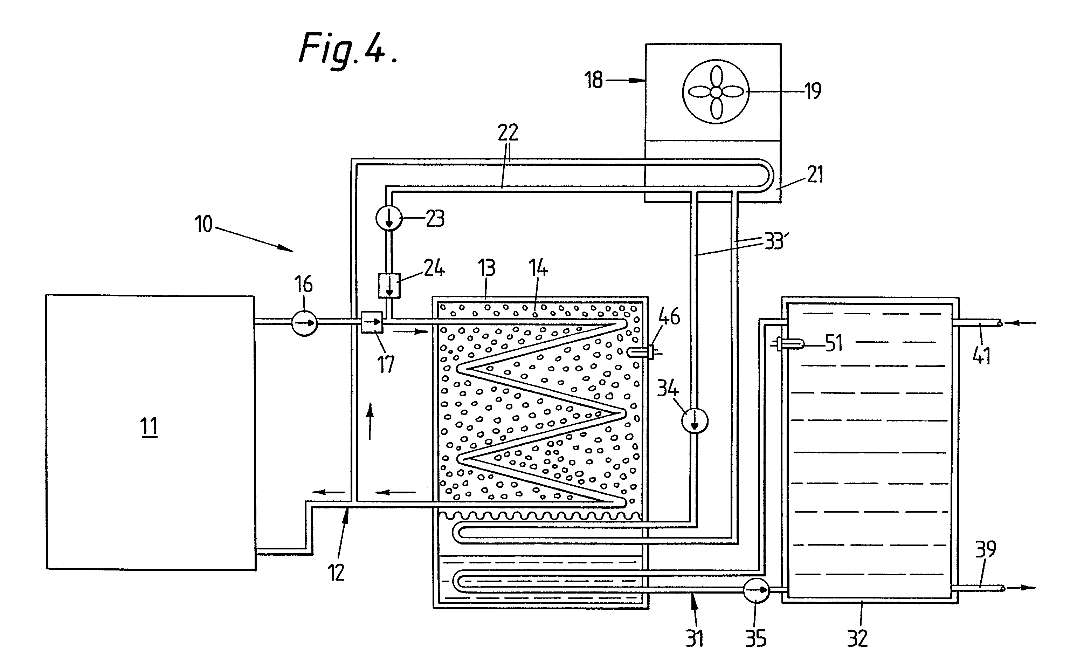

A second embodiment is shown in Figure 4 wherein the second set of conduits are designated as 33' and do not connect with the chilled water heat exchange network 31. In this embodiment the adsorbate pumping unit 25 and the sprayer 26 are eliminated. The internal piping within housing 13 is also eliminated such that chilled water from the reservoir 13 is circulated directly through the heat exchanger network 31.

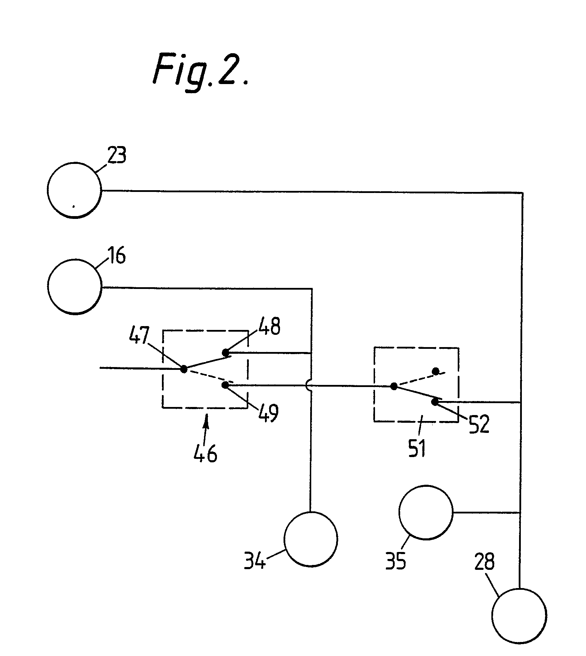

Referring to Figures 1 and 2, it will be seen that located in the housing 13 to sense the temperature of the desiccant bed 14 is a first thermostat 46 having an input terminal 47 connected to an electrical power source and two output terminals 48 and 49. Output terminal 48 is electrically connected to input pump 16 and second cooling pump 34. Output terminal 49 is electrically connected to a second thermostat 51 which is located in reservoir 32 and senses the temperature of the chilled water. The thermostat 51 has a single output terminal 52 which is normally open and which is electrically connected to first cooling pump 23, adsorbate pump 28 and chilled water pump 35.

It should be noted that adsorbate pump 28 is not used in the second embodiment and that water is allowed to remain in the bottom of the chamber.

In operation, with silica gel used as the desiccant and distilled water used as the adsorbate, the housing 13 is maintained under a sub-atmospheric pressure such that the water partial pressure have vlue of about 10.2 to about 12.7 mm of mercury. In this range of partial pressures, water boils at from about 12°C to about 15°C. At the midpoint of the range or about 11.4 mm of mercury, the boiling point of water is 13.3°C. Silica gel is a poor thermal conductor and its capacity to hold adsorbed water is proportional to the temperature of the silica gel. Thus a desiccant bed in an atmosphere where the water partial pressure is 10.2 mm of mercury at 60°C has the capacity to hold a water content at about 4% of the weight of the bed and at 35°C has the capacity to hold a water content at about 14% of the weight of the bed. In as much as the cooling capability of the system is dependent on the amount of water vaporised in the housing, it is clear that the size of the housing and the weight of the desiccant bed 14 will be proportional to the amount of cooling required.

By way of example, assuming that the temperature of the desiccant bed 14 has just reached 60°C, the thermostat 46 connects the electrical power source to thermostat 51 via output terminal 49. When the temperatue of the chilled water in reservoir 32 reaches 17.2°C, the thermostat 51 closes and supplies current to pumps 23, 28 and 35. The chilled water pump 35 circulates water within heat exchanger network 31 into housing 13, wherein adsorbate pump 28 delivers distilled water to the sprayer 26 such that the water can be sprayed onto the heat exchanger network 31. The water sprayed thereon is boiled off at 13.3°C in the low pressure chamber, thereby extracting heat from the circulating water in the heat exchanger network 31, which in turn extracts heat from the chilled water in reservoir 32. The water vapour created by this boiling passes into the porous desiccant bed 14 and is adsorbed releasing heat to the desiccant bed 14; however cooling pump 23 circulates water from the ambient temperature heat exchanger unit 18 through the desiccant bed to remove the heat of adsorption and to cool the desiccant bed 14. The input temperature of the water from unit 18 to the desiccant bed is approximately 29°C which is readily maintained by most conventional cooling towers in most locales.

When the temperature of the chilled water in reservoir 32 reaches 15.6°C, the thermostat 51 opens and the pumps 23, 28 and 35 stop. This sequence is repeated until the temperature of the desiccant bed 14 is lowered to about 35°C, at which point the thermostat 46 opens output terminal 49 and closes output terminal 48 thereby supplying electrical current to pumps 16 and 34. Input pump 16 circulates water at above 60°C through the input heat transfer network 12 which heats the desiccant bed 14 thereby reducing the bed's capacity to hold water and forcing the water back into vapour. Meanwhile cooling pump 34 is circulating water at 29°C through the portion of the chilled water heat exchanger netword 31 within the housing 13, thereby causing the water driven from the desiccant bed 14 to condense, giving up heat to be dispersed by the cooling tower. The water accumulates in the bottom of the housing 13 wherein it remains or drains into accumulation tank 27. When the temperature of the desiccant bed reaches 60°C, the bed is deemed to have been purged of moisture and is thus regenerated and ready to being a new cooling cycle, thus the thermostat 46 opens to output terminal 49 and closes to output terminal 48.

The cycle is repeated for as long as necessary. Of course, sufficient hot water for regeneration must be stored in the input system 11 to permit regeneration during the night. The rate at which the apparatus cycles depends on the rate of flow of the adsorbate pump 28 and the capacity of the desiccant bed 14 as well as the efficiency of the input heat exchanger network 11 in regenerating the desiccant bed; thus the cycle time depends on the physical parameters of the unit which is in turn dependent upon the utilisation of the unit. A prototype used for cooling purposes has been found to operate satisfactorily with a cycle time of about one hour equally divided between regeneration time and cooling time. The energy requirment to drive the pumps is less than 500 watts.

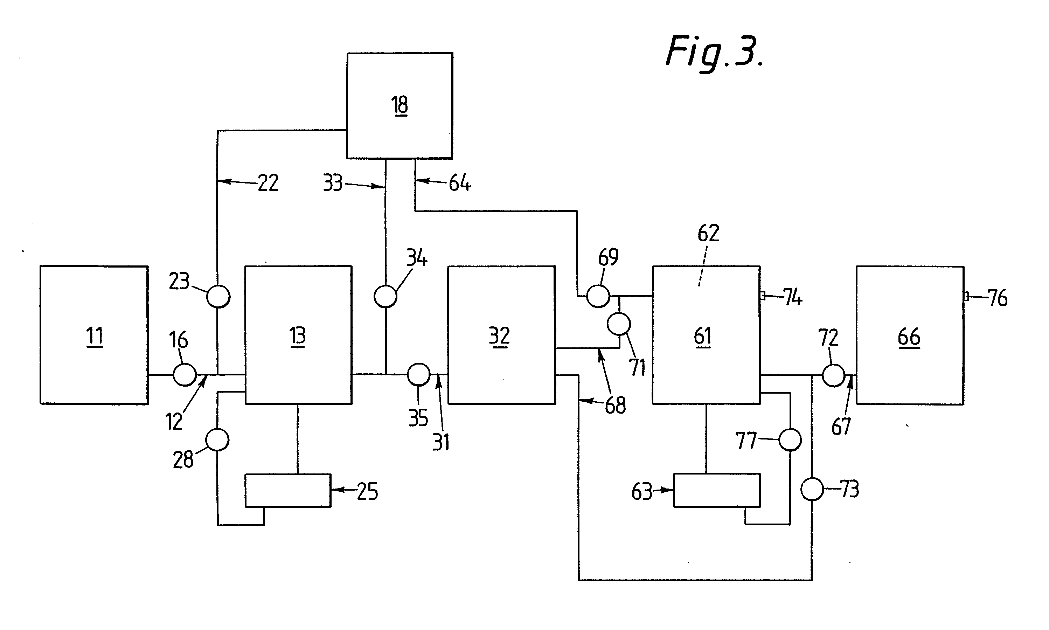

Figure 3 illustrates a multi-stage unit which can be used to further reduce the output temperature. In this embodiment, a second desiccant chamber 61 maintains a second desiccant bed 62 at a lower water partial pressure such that water introduced by a second adsorbate pumping unit 63 boils at a lower temperature. For example, in a system with a water partial pressure of 5mm of mercury, water boils at 1.7°C and in a system with a water partial pressure of 0,25 mm of mercury, water boils at -6.7°C. A regeneration heat exchanger network 64 extends through the second desiccant bed 62 and circulates water from either the ambient temperature heat exchanger unit 18 or input system 11. A second reservoir 66 for a refrigerant is provided and a tertiary heat exchanger network 67 is provided between the second chamber 61 and second reservoir 66 in the same manner as chilled water heat exhcanger network 31 is provided between housing 13 and reservoir 32. Inasmuch as lower temperatures are being used, it may be necessary to use a mixture of water and antifreeze (alcohol) as the refrigerant or medium in the heat exchanger conduits of this stage. The extraction of heat from the second desiccant bed 62 during the cooling phase and the condensation of the adsorbate during the regenertion phase of the cycle utilises an auxiliary heat exchanger conduit 68 system connected to circulate refrigerant cooled within reservoir 32 through the regeneration conduit netword 64 and the tertiary conduit network 67 in the same manner as described with respect to conduits 22 and 33 above. Appropriate pumps 69, 71, 72 and 73 are used to circulate the refrigerant and check valves (not shown) are used to ensure proper flow. Thermostats 74 and 76 control the operation of these pumps and second adsorbate pump 77.

Referring to Figure 5, the solar collector 110 is shown as a flat plate and is mounted on a carriage 111 for rotational movement on a circular track 112, which may be of an I-beam construction, such that carriage 111 is maintained in rolling engagement thereon by rollers 113 and cam followers 114. The carriage is driven about a vertical axis by an electrical, reversible motor 116 operably connected to the carriage by a cable loop 117.

The carriage 111 is preferably A-shaped and supports the collector 110 for rotation about a horizontal axis at its apex 118. A second electric reversible motor 119, operatively connected to a threaded drive member 121, varies the elevation of the collection 110 and also provides improved stability its positioning. The collector 110, carriage 111, and track 112 may be mounted on a platform 122 which may house a storage tank when the collector is used ot heat a fluid. In such an instance the plumbing to and from the collector 110 is accomplished in a conventional manner and is not germane to the present invention.

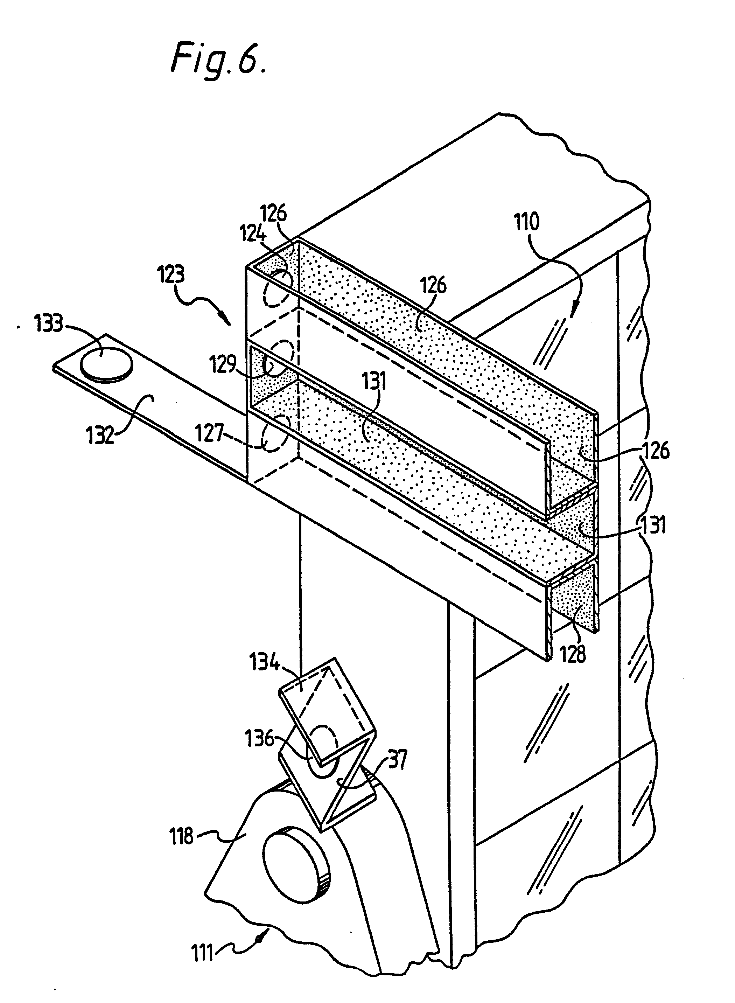

As shown in Figures 5 and 6, tracker assembly 123 is affixed to the collector 110 for concomitant movement therewith and includes an AM solar cell 124 which is mounted at one end of an upwardly opening trough-like shadow box 126, a PM solar cell 127 mounted at one end of a similar downwardly opening shadow box 128, and an east/west solar cell 129 mounted at one end of a laterally opening shadow box 131. The shadow boxes 126, 128 and 132, which are closed at both ends, are parallel to one another although it is not necessary that the shadow boxes be contiguous. an extension 132 of the assembly 123 carries a summer homing solar cell 133. A Z-shaped bracket 134 carries a winter homing solar cell 136 and is mounted on the carriage 111 for movement therewith about the vertical axis, although the bracket 134 does not rotate with the collector 110 about the horizontal axis at the apex 118. The Z-shape of the bracket shades the solar cell 136, which is mounted on the upright portion 137 of the bracket 134, when the sun's elevation is about 50°. The bracket 134 is mounted so that the upright portion 136 is offset 30° in azimuth from the longitudinal axis of the shadow boxes.

Each solar cell 124, 127, 129, 133 and 136 has an electrical output, responsive to sunlight, which is used to actuate an associated self-resetting relay, which each have a set of contacts in the current path to respective motors 116 or 199, which thus move the carriage 111 and collector 110 in responsive to solar radiation activating one or more of the solar cells. The AM solar cell 124 is mounted within the shadow box 126 at the end proximal the collector 110. Each of the shadow boxes is about 2.5 metres long. The shadow box 126 shades the solar cell 124 from direct sunlight except at certain angles of the sun relative to the shadow box 126. That is, the sun can shine on the solar cell 124 only when the sun's elevation exceeds the elevation of the shadow box 126 and the shadow box 126 has its longitudinal axis substantially aligned toward the sun. AM solar cell 124 is connected to an AM relay 138 shown in Figure 6. The relay 138 is connected to a first input 139 of motor 119. When electrical current is supplied through the relay 138 to the first input 139, the motor 119 causes the collector 110 and tracking assembly 123 to increase in elevation. An AM limit switch 141 on the collector 110 and carriage 111 opens the current path between relay 138 and the motor 119 when the collector 110 has reached its maximum desired elevation.

The PM solar 127 is connected to and actuates a PM relay 142 which is in a current path to a second input 143 of motor 119. Since the PM shadow box 128 is downwardly opening, the PM solar cell 127 generates an electrical output only when the sun's elevation is below the elevation of the shadow box 128 and the collector 110. Current flow through the second input 143 causes the motor 119 to lower the collector 110 and tracking assembly 123 in elevation.

The east/west solar cell 129 is connected to actuate and east/west relay 144 which is in the current path to a west input 146 of the motor 116. Current flow through the west input causes motor 116 to turn the carriage clockwise as the sun moves from east to west. Inasmuch as the shadow box 132 associated with the east/west solar cell 129 is laterally opening, the solar cell 129 is exposed to solar radiation only when the sun's azimuth is more westerly than that of the shadow box 131 and the collector 110. A west limit switch 147 opens the current path to the west input 146 when the carriage has reached a pre-determined westerly rotation.

It is necessary to reset the collector 110 and tracking assembly 123 each night. Thus a photo cell 148 is provided which acts as a switch to close a current path to an east input 149 of motor 116.

Current flow via east input 149 causes the motor 116 to rotate the carriage counter-clockwise. An east limit switch 151 operably connected to the carriage 111 simultaneously opens the current path to the east input 149 and closes the current path to the second input 143, when the collector 110 and tracking assembly 123 reaches a pre-determined elevation.

Weather conditions may obscure the sun during a portion of the day and consequently the collector 110 and tracker assembly 123 will not be properly aligned with the sun. To accommodate this condition homing solar cells 133 and 136 are positioned to direct the repositioning of the collector 110 when the sun re-emerges. Summer homing solar cell 133 is positioned on extension 132 for concomitant motion with the collector 110 and is normally shaded by the collector 110 or the tracking assembly 123. The solar cell 133 is connected to a summer homing relay 153 which is in a current path to AM limit switch 141. A homing limit switch 154 opens this current path and closes a current path to west limit switch 147 when the collector has reached a pre-determined elevation.

The winter homing solar cell 136 is mounted on the Z-bracket 134 such that it is shaded from sunlight except when the sun is below 50° in elevation and is more than 30° westwardly of the tracking assembly 123 in azimuth. In actual practice the azimuthal difference exceeds 30° and is nearer to 60° inasmuch as the angle of incidence of the solar radiation on the solar 136 must be 30° or greater to produce a useful electrical output. The solar cell 136 is connected to actuate a winter homing relay 156 which completes a current path to west limit switch 147.

Inasmuch as the collector 110 will be operating at a high efficiency, it may be possible for the collector to absorb an excess amount of energy. To counteract this a sensor 157 is positioned on the collector or remotely, e.g. at the storage tank, to detect the accumulation of energy in excess of a predetermined level. The sensor 157 is connected to and actuates a relay 158 which has a plurality of ganged contacts. This relay 158 opens the current path from each solar cell to its associated relay and closes a current path to the east limit switch 151. A sensor 159 is provided to detect even higher accumulations of energy or an overload of energy and is connected to a relay 161 which maintains itself in an actuated condition once triggered. This relay 161 also disables the solar cells and closes a current path to the east limit switch 151.

In operation, the collector 110 and tracker assembly 123 are aligned in azimuth and elevation to a predetermined initial position which corresponds to the actuation position of east limit switch 151 and night limit switch 152, and is calculated to provide alignment with the sun shortly after sunrise. This initial position is normally set to correspond to the azimuth of the sunrise on the summer solstice. As the sun makes its apparent ascent solar radiation falls on the AM solar cell 124 and the east/west solar cell 129. The sensitivity of the solar cells are selected to require to a minimum BTU energy transfer to the collector before the tracking assembly will become operational to avoid spurious tracking in diffuse lighting on hazy days. When adequate sunlight is available the solar cells will generate a useful electrical output when about one-fourth to one-half of their surface area is exposed to direct solar radiation. Thus, as the sun appears to move it radiates these solar cells causing the solar cells to actuate their respective relays and energise the motors 116 and 119. The motors, in turn, rotate the collector 110 and tracking assembly 123 about the system's vertical and horizontal axis until the solar cells are again shaded. The tracking assembly 123 is affixed to the collector 110 such that shading of the solar cells aligns the surface of the collector 110 perpendicular to the incident solar radiation. During normal morning tracking the PM solar cell 127, mounted inside the downwardly opening shadow box 128, is shaded. The AM limit switch 141 opens the current path to the first input 139 of motor 119 to prevent the collector from being elevated beyond a pre-determined angle by motor 119. As the sun passes its zenith and descends, elevational tracking is performed by the PM solar cell 127 and shadow box 128, and the AM solar cell 124 is shaded.

After a period of obscuration, during which none of the solar cells generates a usable output, either the summer homing solar cell 133 or the winter homing solar cell 136 will become sufficiently exposed to the sun to close its associated relay. The summer homing solar cell first actuates the elevating motor 119. If the sun has not progressed more than 60° in azimuth during the obscuration, the elevation of the east/west shadow box 131 by motor 119 will expose the east/west solar cell and it will close its associated relay 144 to drive the motor 116. If the east/west solar cell is not sufficiently exposed by the elevation of the collector 110, then at a pre-determined elevation the homing limit switch 154 opens the current path from the summer homing relay 153 to the motor 119 and closes the current path to the motor 116 which moves the collector westwardly in azimuth to expose solar cell 129 and either cell 124 or 127 for normal tracking. The winter homing solar cell 136 will actuate the motor 116 to move the collector westwardly in azimuth until the east/west solar cell 129 is energised at which point the winter solar cell is insufficiently exposed. Since the elevation of the sun is much less in the winter than in the summer, the solar tracking of either AM solar cell 124 or PM solar cell 127 will be self-correcting once the tracker assembly 123 is properly aligned in azimuth.

## Claims

1. Apparatus for cooling a space said apparatus being characterised in that it comprises:-

(a) a heat source (11) for heating water to a predetermined temperature from a waste heat source and storing said water at or above said temperature;

(b) a chamber (13) for housing a quantity of desiccant (14) at a sub-atmospheric pressure;

(c) a reservoir (32) for holding chilled water;

(d) adsorbate circulatory means (25-29) for introducing and removing water from said chamber (13);

(e) a first heat exchanger (12) for circulating water through said heat source and through said desiccant (14) in said chamber (13);

(f) a second heat exchanger (31) for circulating water through said reservoir (32) and a portion of said chamber (13) proximal said adsorbate circulating means (25-29);

(g) an ambient temperature heat exchanger (18) for cooling the water in said first or second heat exchangers and operably connected to divert water selectively from said first or second heat exchanger means;

(h) circuit means (16, 23, 28, 34, 35, 46-52) for controlling water flow through said first and second heat exchangers (12, 31) and said adsorbate circulating means (25-29) responsive to the temperature in said chamber (13) and said reservoir (32); and

(i) an output system (39, 41) connected to said reservoir (32) for circulating chilled water therein around said volume of space to be cooled.

2. Apparatus according to claim 1 characterised in that said circuit means comprises:

(a) a first thermostat (46) connected to said chamber (13) for sensing the temperature therein and having an input terminal (47) connected to a source of electrical current and first and second output terminals (48, 49) selectively connected to said input terminal in accordance with the temperature sensed;

(b) an input pump (16) connected to said first output terminal (48) for circulating water in said first heat exchanger (12) between said heat source (11) and said chamber (13);

(c) a first cooling pump (34) electrically connected to said first output terminal (45) for circulating water in said second heat exchanger (31) between said chamber (13) and said ambient temperature heat exchanger (18);

(d) a second thermostat (51) connected to said reservoir (32) for sensing the temperature of the chilled water therein and having an input terminal electrically connected to the second output terminal (49) of said first thermostat (46) and a normally open output terminal (52);

(e) an adsorbate pump (28) electrically connected to said normally open output terminal (52) for introducing water into said chamber (13) via said adsorbate circulating means (25);

(f) a chilled water pump (35) electrically connected to said normally open output terminal (52) for circulating water within said second heat exchanger means between said chamber (13) and said reservoir (32); and

(g) a second cooling pump (23) electrically connected to said normally open output terminal (52) for circulating water in said first heat exchanger (12) between said chamber (13) and said ambient temperature heat exchanger (18).

3. Apparatus according to claim 2 characterised in that said first thermostat (46) connects said source of electric current to said first output terminal (48) when the temperature in said chamber (13) reaches approximately 35°C and connects said source of electrical current to said second output terminal (49) when the temperature of said chamber (13) reaches approximately 60°C.

4. Apparatus according to claim 1, 2 or 3, characterised in that said ambient temperature heat exchanger is a cooling tower.

5. Apparatus according to any preceding claim, characterised in that said desiccant is silica gel and said sub-atmospheric pressure is maintained in a range from about 0.40 atmospheres to 0.50 atmospheres.

6. Apparatus according to any preceding claim, characterised in that said first heat exchanger (12) comprises a water filled primary conduit extending within said desiccant (14) and with said heat source (11), an input pump (16) connected to said primary conduit for circulting water therein, a water filled secondary conduit (22) connected between said primary conduit (12) and said ambient temperature heat exchanger (18), a first cooling pump (34) connected to said secondary (22) conduit for circulating water between said chamber (13) and said ambient temperature heat exchanger (18); and said second heat exchanger means comprises a water filled main conduit (31) extending within said reservoir (32) and said chamber (13), a chilled water pump (35) connected to said main conduit for circulating water therein, a water filled auxiliary conduit (33) connected between said main conduit (31) and said ambient temperature heat exchanger means (18), and a second cooling pump (23) connected to said auxiliary conduit (33) for circulating water between said chamber (13) and said ambient temperature heat exchanger (18).

7. Apparatus according to claim 6, characterised in that said adsorbate means comprises a gravity collector (27) co-operatively positioned beneath said chamber (13) for collecting water condensed therein, a sprayer (26) connected to said gravity collector (27) for dispersing water therefrom proximal said main conduit (31) with said chamber (13), and an adsorbate pump (28) connected to urge water from said gravity collector (27) to said sprayer (26).

8. Apparatus according to any preceding claim, characterised in that said output system includes:

(a) a second chamber (61) for housing a quantity of desiccant (62) at a lower sub-atmospheric pressure;

(b) a second reservoir (66) for holding a refrigerant;

(c) a second adsorbate circulating means (63) for introducing and removing refrigerant into and from said second chamber (61);

(d) a secondary heat exchanger means (64) for circulating water through said ambient temperature heat exchanger (18) and said desiccant (62) in said second chamber (61);

(e) a tertiary heat exchanger (67) for circulating refrigerant through said second reservoir (66) and said second chamber (61) wherein said refrigerant is a mixture of water and alcohol; and

(f) auxiliary cooling means (72-77) for selectively extracting heat from said desiccant (62) in said second chamber (61) or for extracting heat from said refrigerant in said tertiary heat exchanger (67) by circulation thereof through said reservoir (66).

9. Apparatus according to any preceding claim, characterised in that said heat source (11) comprises a solar collector (110) supported by a movable carriage (111) having an initial position; and apparatus for tracking the sun and moving said collector comprising:

(a) a first solar cell (124) responsive to sunlight for generating a first electrical output;

(b) a first elongated trough-like member (126) for blocking sunlight at selected angles from said first solar cell (124) for generating an electrical output operably affixed to said collector for movement concomitantly therewith with said trough-like member (126) having one side thereof open and having said first solar cell mounted at one end thereof;

(c) a second solar cell (127) responsive to sunlight for generating a second electrical output;

(d) a second elongated trough-like member (128) for blocking sunlight at selected angles from said second solar cell (126) for generating an electrical output co-operatively affixed to said collector for concomitant motion therewith with said second trough-like member having one side thereof open with said open side facing opposite the open side of the first said trough-like member (126);

(e) means for varying the inclination of said collector with respect to a vertical plane responsive to said electrical output comprising:

(i) a reversible electric motor (119) operably connected to said collector having a first input (139) whereby said motor is driven in a first direction and a second input (143) whereby said motor is driven in a reverse direction;

(ii) a first self-resetting relay (138) operably connected to said first solar cell for generating an output and actuated thereby to provide a current path to said first input (137); and

(iii) a second self-resetting relay (142) operably connected to said second solar cell (127) and actuated thereby to provide a current path to said second input (143), whereby said collector is progressively inclined away from said plane responsive to said first output as the sun increases in elevation and is progressively inclined toward said plane responsive to said second output as the sun decreases in elevation;

(f) a third solar cell (129) responsive to sunlight for generating a third electrical output;

(g) a third elongated trough-like member (131) for blocking sunlight at selected angles from said third solar cell for generating an electrical output affixed to said collector for concomitant motion therewith with said third trough-like member having one side thereof open with said open side facing perpendicular to the open side of said first and second trough-like members (126, 128);

(h) means (116) for turning said carriage responsive to said third electrical output whereby said collector is turned in accordance with the sun's azimuth; and

(i) reset circuit means (133, 136, 153, 156) responsive to the absence of light for causing said means for varying the inclination of said collector and said means for turning said carriage to return said collector and carriage to said initial position.

10. Apparatus according to claim 9, characterised in that said reset circuit means comprises home circuit means responsive to sunlight for aligning said plurality of trough-like members with the sun when sunlight has been obscured until the sun reaches an azimuth and elevation substantially removed from the azimuth and elevation of said members with said homing circuit means comprising:

(a) a summer homing solar cell (133) mounted on said plurality of trough-like members (126, 128, 131) for concomitant motion therewith, shadowed from sunlight when said members are aligned with the sun and having an electrical output responsive to sunlight;

(b) a summer relay (153) actuated by said electrical output of said summer homing solar cell (133) to complete a current path to said electric motors;

(c) a limit switch (141) operably connected to said plurality of trough-like members (126, 128, 131) and said current path and adapted to selectively complete said current path to said first electric motor (119) or said second electric motor (116) in accordance with the elevation of said members;

(d) a winter homing solar cell (136) mounted for concomitant rotation about said vertical axis with said plurality of trough-like members and to generate an electrical output only when the sun is below 50° in elevation and greater than 60° in azimuth froms aid members; and

(e) a winter relay (156) actuated by the output of said second homing solar cell to provide a current path to said second electric motor (116).

11. Apparatus according to claim 9 or 10, characterised in that said reset circuit means includes:

(a) a photo cell switch (148) adapted to close in the absence of light to provide a current path to said electric motors (116, 119);

(b) a first limit switch (151) operably connected in said current path from said photo cell switch (148) having a normally closed contact providing a current path to said second electric motor (116) and a normally open contact providing a current path to said first electric motor (119) and adapted to open said closed contact and close said open contact when said members are aligned in azimuth in said predetermined initial position; and

(c) a second limit (152) switch operably connected in said current path from said normally open contact and having a normally closed contact providing a current path to said first electric motor (119), with said second limit switch adapted to open said contact when said members are aligned in elevation in said pre-determined initial position;

(d) means (157, 159) for sensing an excess energy accumulation by said solar collector and having an output; and

(e) means (161) responsive to said output for interrupting the current path of the electrical output of said solar cells and for providing a current path to said first limit switch (151).

# Fig.1.

0 272 031

Fig.2.

Fig.3.

0 272 031

Fig.4.

Fig.5.

Fig.6.

Fig.7.